# EUROPÄISCHE PATENTSCHRIFT

(11) **EP 3 589 672 B1**
(45) Veröffentlichungstag und Bekanntmachung des Hinweises auf die Patenterteilung: **12.01.2022**
(21) Anmeldenummer: 18706540.4
(22) Anmeldetag: 28.02.2018
(51) Int. Cl.: C08G 18/48, C08G 18/52, C08J 3/22, C08G 18/73, C08G 18/75, C08G 18/76, C08G 18/80, C08K 3/32, C08G 18/38, C08G 18/46

(54) **REAKTIONSGEMISCHE VON ISOCYANATEN UND POLYOLEN MIT VERLÄNGERTER TOPFZEIT**
REACTION MIXTURES OF ISOCYANATES AND POLYOLS HAVING AN EXTENDED POT LIFE
MÉLANGE DE RÉACTION D'ISOCYANATES ET DE POLYOLES AYANT UNE DURÉE D'EMPLOI PROLONGÉE

(30) Priorität: 02.03.2017 EP 17158947
(43) Veröffentlichungstag der Anmeldung: 08.01.2020
(73) Patentinhaber: Covestro Intellectual Property GmbH & Co. KG, 51373 Leverkusen (DE)
(72) Erfinder: MATNER, Mathias, 41464 Neuss (DE); MALEIKA, Robert, 40589 Düsseldorf (DE); STERN, Frank-Stefan, 51427 Bergisch Gladbach (DE)
(74) Vertreter: Levpat
(86) Internationale Anmeldenummer: PCT/EP2018/054942
(87) Internationale Veröffentlichungsnummer: WO 2018/158318

(56) Entgegenhaltungen:
- JP-A- 2002 121 379
- US-A- 5 962 561

## Beschreibung

Die vorliegende Erfindung betrifft Zusammensetzungen und Verfahren, die die Topfzeit von Reaktionsgemischen, die Isocyanate, Polyole und Entformungsmittel enthalten, verlängern.

Polyurethan ist ein übliches Material zur Herstellung von optischen Bauteilen, insbesondere Linsen. Bei der Herstellung solcher Bauteile werden die Polyolkomponente und die Isocyanatkomponente gemischt und in eine Gießform gefüllt, in der sie miteinander reagieren und das ausgehärtete optische Bauteil bilden. Um das Herauslösen des fertigen Bauteils aus der Gießform zu erleichtern, werden dem Reaktionsgemisch häufig Formtrennmittel, insbesondere saure Phosphorsäureester, hinzugefügt.

Die Zugabe des sauren Phosphorsäureesters zum Reaktionsgemisch führt zu einer Beschleunigung des Viskositätsanstiegs, d.h. einer Beschleunigung der Reaktionsgeschwindigkeit der Polyurethanbildung. Dieser Effekt ist häufig unerwünscht, da hierdurch die Topfzeit des fertigen Reaktionsgemisches herabgesetzt wird, was eine Verarbeitung des Gemisches erschwert, da nur kleine Mengen angesetzt werden können bzw. das angesetzte Gemisch in kurzer Zeit verwendet werden muss.

WO 2010/043392 beschreibt ein Verfahren mit dem dieser unerwünschte Viskositätsanstieg des Reaktionsgemisches nach Zugabe des sauren Phosphorsäureesters reduziert werden kann. Der Phosphorsäureester wird der Isocyanatkomponente des Gemisches hinzugefügt und das entstandene Gemisch für 1 bis 10 Stunden bei Temperaturen zwischen 20 °C und 100 °C inkubiert. Es wurde gezeigt, dass die Topfzeit des Reaktionsgemisches deutlich verlängert ist, wenn die Polyolkomponente dem Gemisch von Isocyanatkomponente und saurem Phosphorsäureester erst nach dieser Inkubation zugefügt wird. Nachteilig an dieser Vorgehensweise ist die Verlängerung des Arbeitsprozesses, da die Inkubation der Isocyanatkomponente mit dem sauren Phosphorsäureester der Herstellung des Reaktionsgemisches für die Polyurethanherstellung vorgeschaltet werden muss.

Der vorliegenden Erfindung lag die Aufgabe zugrunde, einen Weg zu finden, der die Topfzeit des Reaktionsgemisches von Isocyanat- und Polyolkomponente in Anwesenheit eines sauren Phosphorsäureesters herabsetzt, ohne dass die Isocyanatkomponente der oben beschriebenen zeitaufwendigen Vorbehandlung unterzogen werden muss. Diese Aufgabe wird durch die unten beschriebenen Ausführungsformen der Erfindung gelöst.

In einer ersten Ausführungsform betrifft die vorliegende Erfindung eine Zusammensetzung enthaltend ein Isocyanat A und einen sauren Phosphorsäureester B, wobei das Massenverhältnis von A zu B höchstens 2:1 beträgt. Diese Zusammensetzung wird auch als "Masterbatch" bezeichnet.

### Isocyanat A

Das Isocyanat A ist erfindungsgemäß ein aromatisches, araliphatisches, cycloaliphatisches oder aliphatisches Isocyanat. Bevorzugt ist das Isocyanat ein araliphatisches oder aliphatisches Isocyanat. Ganz besonders bevorzugt ist es ein aliphatisches Isocyanat.

Das Isocyanat A ist erfindungsgemäß ein monomeres oder ein oligomeres Isocyanat. Oligomere Isocyanate sind solche Isocyanate, die aus wenigstens zwei monomeren Isocyanaten aufgebaut sind. Die monomeren Isocyanate sind bevorzugt durch wenigstens eine Struktur ausgewählt aus der Gruppe bestehend aus Uretdion-, Isocyanurat-, Allophanat-, Biuret-, Iminooxadiazindion- und Oxadiazintrionstrukturen miteinander verknüpft.

Die durchschnittliche Isocyanatfunktionalität des erfindungsgemäßen Isocyanats A ist wenigstens 2, d.h. im Durchschnitt enthält jedes Molekül des erfindungsgemäßen Isocyanats A wenigstens zwei Isocyanatgruppen.

Erfindungsgemäße Isocyanate sind beliebige, auf verschiedene Weise, beispielsweise durch Phosgenierung in der Flüssig- oder Gasphase oder auf phosgenfreien Weg, wie z.B. durch thermische Urethanspaltung, zugängliche Polyisocyanate. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan, 1,3- und 1,4-Bis(isocyanatomethyl)cyclohexan, Bis-(isocyanatomethyl)-norbornan, 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-/isocyanatomethyl)benzol (Xylylendiisocyanat; XDI), 1,3-und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls erfindungsgemäße Diisocyanate finden sich darüber hinaus beispielsweise in Justus Liebigs Annalen der Chemie Band 562 (1949) S. 75 -136*.*

In einer Ausführungsform der Erfindung können als oligomere Isocyanate A auch isocyanatterminierte Präpolymere verwendet werden. Diese sind aber gegenüber den oben beschriebenen Isocyanaten als Isocyanat A weniger bevorzugt. Besagte Präpolymere sind dem Fachmann bekannt und können durch Umsetzung eines Überschusses eines geeigneten monomeren Isocyanats mit einem geeigneten Alkohol erhalten werden. Die geeigneten monomeren Isocyanate sind oben beschrieben. Als geeignete Alkohole kommen die dem Fachmann bekannten aliphatischen Alkohole (z.B. Methanol, Ethanol und entsprechende höhermolekulare Monoalkohole), niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) in Frage, aber auch höhermolekulare Hydroxyverbindungen wie Polyetheralkohole, Polycarbonatalkohole sowie Polythioetheralkohole.

Geeignete Polyetheralkohole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Startermoleküle für die Herstellung von Polyetheralkoholen sind Moleküle mit mindestens einer gegenüber Epoxiden reaktiven Element-Wasserstoffbindung oder beliebige Gemische derartiger Starter-Moleküle.

Möglich sind selbstverständlich auch die Polyetheralkohole mit darin dispergierten organischen Füllstoffen wie beispielsweise Additionsprodukten von Toluylendiisocyanat mit Hydrazinhydrat oder Copolymerisaten von Styrol und Acrylnitril.

Einsetzbar sind auch die durch Polymerisation von Tetrahydrofuran erhältlichen Polytetramethylenetherglykole mit Molekulargewichten von 400 bis 4000, aber auch Hydroxylgruppen enthaltende Polybutadiene.

Unter den Polycarbonatalkoholen sind Umsetzungsprodukte von Glykolen vom Typ Ethylenglykol, Diethylenglykol, 1,2-Propylenglykol, Butandiol, Neopentylglykol oder 1,6-Hexandiol und/oder Triolen wie beispielsweise Glycerin, Trimethylolpropan, Pentaerythrit oder Sorbit mit Diphenyl- und/oder Dimethylcarbonat zu verstehen. Die Umsetzung ist eine Kondensationsreaktion, bei der Phenol und/oder Methanol abgespalten werden. Es resultieren, je nach Zusammensetzung, flüssige bis wachsartige, amorphe Typen mit Tg-Werten von ≥ 40°C oder kristalline Polycarbonatpolyole mit Schmelzbereichen von 40 bis 90°C.

Geeignete Polyesteralkohole können beispielsweise durch die Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton hergestellt werden. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2, 4, Triethylenglykol, Tetraethylenglykol, Polyethylenglykol, Dipropylenglykol, Polypropylenglykol, Dibutylenglykol und Polybutylenglykol.

Weitere geeignete Polyesteralkohole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesteralkoholen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr Säuren eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische.

Polyesteralkohole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, können ebenfalls eingesetzt werden.

Es können aber auch Polyesteralkohole oleochemischer Herkunft verwendet werden. Derartige Polyesteralkohole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesteralkoholen mit 1 bis 12 C-Atomen im Alkylrest hergestellt werden.

Der Begriff "Isocyanat A" bezieht sich sowohl auf Zusammensetzungen, die nur ein einziges Isocyanat enthalten als auch auf Gemische von wenigstens zwei unterschiedlichen Isocyanaten. Hierbei können beliebige Gemische aus den oben definierten monomeren und oligomeren Isocyanaten gebildet werden.

Besonders bevorzugt enthält das Isocyanat A wenigstens ein monomeres Isocyanat ausgewählt aus der Gruppe bestehend aus HDI, IPDI, H₁₂-MDI und XDI. Besagtes Isocyanat kann erfindungsgemäß als Monomer oder als Oligomer vorliegen. Auch Gemische von Monomeren und Oligomeren desselben oder unterschiedlicher Isocyanate sind erfindungsgemäß.

Ganz besonders bevorzugt enthält das Isocyanat A der erfindungsgemäßen Zusammensetzung kein anderes monomeres Isocyanat und kein oligomeres Isocyanat, das andere monomere Isocyanate als die als erfindungsgemäß, bevorzugt oder besonders bevorzugt gekennzeichneten Verbindungen enthält.

### Saurer Phosphorsäureester B

Der erfindungsgemäße saure Phosphorsäureester B wird vorzugsweise durch Formel (I) beschrieben:

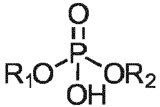

Wobei R₁ Wasserstoff oder ein organischer Rest ist; und
R₂ ein organischer Rest oder ein Wasserstoffatom ist.

Wenn R₁ ein organischer Rest ist, so kann er identisch zu oder verschieden von dem organischen Rest R₂ sein.

Die organischen Reste R₁ und R₂ in Formel (I) sind bevorzugt Alkylreste. Sie bestehen bevorzugt aus verzweigten oder unverzweigten Alkanen mit 2, 3, 4, 5, 6, 7, 8, 9, 10, 11, 12, 13, 14, 15, 16, 17 oder 18 Kohlenstoffatomen. Hierbei ist es gleichgültig, ob ein primäres oder sekundäres Kohlenstoffatom eines Alkans an das Sauerstoffatom des Phosphorsäurerests gebunden ist.

Besonders bevorzugte organische Reste in Formel (I) sind ausgewählt aus der Gruppe bestehend aus Propyl-, Isopropyl-, Butyl-, Isobutyl-, Pentyl-, Isopentyl-, Hexyl-, Isohexyl-, Heptyl-, Isohepyl-, Octyl-, Isooctyl-, Nonyl-, Decyl-, Isodecyl-, Dodecyl- und Tridecylresten. Ganz besonders bevorzugt sind Reste ausgewählt aus der Gruppe bestehend aus Octyl-, Decyl- und Dodecylresten.

Weiterhin können die organischen Reste R₁ und R₂ erfindungsgemäß auch Ethergruppen oder Halogene enthalten.

Besonders bevorzugt enthält der saure Phosphorsäureester B wenigstens einen Phosphorsäureester ausgewählt aus der Gruppe bestehend aus Phosphorsäure-mono-n-octylester, Phosphorsäure-mono-n-decylester, Phosphorsäure-mono-iso-decylester, Phosphorsäure-mono-n-dodecylester, Phosphorsäure-mono-n-octadecylester, Phosphorsäure-di-n-octylester, Phosphorsäure-mono-octylmono-n-decylester, Phosphorsäure-di-iso-decylester und Phosphorsäure-di-n-octyldecylester.

In einer ebenfalls bevorzugten Ausführungsform der Erfindung ist der saure Phosphorsäureester B ein Gemisch von verschiedenen sauren Phosphorsäureestern, die sich jeweils durch ihre unterschiedlichen organischen Reste R₁ und/oder R2 unterscheiden.

In einer besonders bevorzugten Ausführungsform der Erfindung enthält der saure Phosphorsäureester B ein Gemisch aus Phosphorsäure-mono-n-octylester, Phosphorsäure-mono-n-decylester, Phosphorsäure-mono-n-dodecylester, Phosphorsäure-di-n-octylester und Phosphorsäure-mono-octyl-mono-n-decylester.

In einer weiteren bevorzugten Ausführungsform wird der saure Phosphorsäureester durch Formel (II) beschrieben:

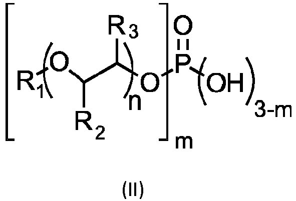

Im sauren Phosphorsäureester gemäß Formel (II) ist m=1 oder m=2, n repräsentiert eine ganze Zahl zwischen 0 und 20, stärker bevorzugt eine ganze Zahl zwischen 0 und 10. R₁ repräsentiert eine Alkylgruppe mit 1 bis 20 Kohlenstoffatomen oder eine Phenylalkylgruppe mit 7 bis 20 Kohlenstoffatomen.

Bevorzugte Alkylgruppen R₁ in Formel (II) sind Methyl, Ethyl, n-Propyl, Isopropyl, n-Butyl, sec-Butyl, tert-Butyl, n-Pentyl, n-Hexyl, n-Heptyl, sec-Heptyl, 1-Propylbutyl, n-Oktyl, 2-Ethylhexyl, sec-Oktyl, n-Nonyl, 1-Butylpentyl, n-Decyl, n-Undecyl, 1-Pentylhexyl, n-Dodecyl, n-Tridecyl, 1Hexylheptyl, n-Tetradecyl, n-Pentadecyl, n-Hexadecyl, n-Heptadecyl, 1-Octylnonyl, n-Octadecyl und n-Nonadecyl.

Bevorzugte Phenylalkylgruppen R₁ in Formel (II) sind Methylphenyl, Dimethylphenyl, Propylphenyl, Butylphenyl, Pentylphenyl, Hexylphenyl, Heptylphenyl, Octylphenyl und Nonylphenyl.

In Formel (II) repräsentieren R₂ und R₃ unabhängig voneinander Wasserstoff, Methyl oder Ethyl. Vorzugsweise sind R₂ und R₃ Wasserstoff oder einer der vorgenannten Reste ist Wasserstoff und der andere Methyl.

In einer besonders bevorzugten Ausführungsform der vorliegenden Erfindung enthält der saure Phosphorsäureester B eine Verbindung gemäß Formel (II), wobei n=1 ist, R₁ C₄H₉ ist, sowie R₂ und R₃ Wasserstoff sind. M ist in dieser Ausführungsform 2 oder 3. Auch Gemische, bei denen bei einem Teil des sauren Phosphorsäureesters M=1 und bei einem anderen Teil M=2 ist, sind erfindungsgemäß. Stärker bevorzugt besteht der saure Phosphorsäureester B zu wenigstens 85 Gew.-% aus einer solchen Verbindung.

In einer weiteren bevorzugten Ausführungsform ist der saure Phosphorsäureester B ein Gemisch aus wenigstens einem Phosphorsäureester gemäß allgemeiner Formel (I) und wenigstens einem Phosphorsäureester gemäß allgemeiner Formel (II).

### Mischungsverhältnisse

Das Gewichtsverhältnis der Isocyanatkomponente A und des sauren Phosphorsäureesters B in der erfindungsgemäßen Zusammensetzung liegt vorzugsweise höchstens bei 3,5 : 1,0. Höhere Gewichtsanteile des sauren Phosphorsäureesters B sind bevorzugt. Stärker bevorzugt liegt das Gewichtsverhältnis von Isocyanatkomponente A und saurem Phosphorsäureester B zwischen 3,0: 1,0 und 1,0 : 8,0, noch stärker bevorzugt zwischen 2,0 : 1,0 und 1,0: 8,0 und noch stärker bevorzugt 2,0 : 1,0 bis 1,0: 6,0. Ganz besonders bevorzugt ist der Bereich zwischen 2,0 : 1,0 und 1,0: 4,0. Am stärksten bevorzugt liegt das Gewichtsverhältnis der Isocyanatkomponente A und des sauren Phosphorsäureesters B zwischen 1,0 : 1,0 und 1,0 : 4,0.

### Inkubation der Komponenten A und B

Die der vorliegenden Erfindung zugrundeliegende Studie hat gezeigt, dass die erfindungsgemäße Zusammensetzung als Formtrennmittel für Reaktionsgemische von Polyisocyanatkomponenten und mit Isocyanat reaktiven Verbindungen geeignet ist und dass die Zugabe des sauren Phosphorsäureesters B zusammen mit einer Isocyanatkomponente A den sonst nach direkter Zugabe des sauren Phosphorsäureesters B zum Reaktionsgemisch beobachteten Viskositätsanstieg verringert. Dieser Effekt setzt voraus, dass die erfindungsgemäße Zusammensetzung aus der Isocyanatkomponente A und dem saure Phosphorsäureester B vor ihrer Zugabe zum Reaktionsgemisch genügend Zeit hatten, um miteinander zu reagieren.

Deswegen ist die erfindungsgemäße Zusammensetzung enthaltend ein Isocyanat A und einen sauren Phosphorsäureester B eine Zusammensetzung, die nach dem Mischen der Komponenten A und B im oben beschriebenen Gewichtsverhältnis wenigstens für 8, 16 oder 24 Stunden inkubiert wurde.

Bevorzugt ist eine Inkubationszeit von wenigstens 12 Stunden. Die Inkubation erfolgt vorzugsweise bei Raumtemperatur. Unter "Raumtemperatur" wird in dieser Anmeldung vorzugsweise der Temperaturbereich zwischen 4 °C und 100 °C, stärker bevorzugt zwischen 10 °C und 40 °C, und noch stärker bevorzugt zwischen 15 °C und 30 °C verstanden.

Bei geringeren Temperaturen werden längere Inkubationszeiten bevorzugt, bei höheren Temperaturen sind auch kürzere Inkubationszeiten möglich. So werden im Temperaturbereich zwischen 4 °C und 20 °C Inkubationszeiten von wenigstens 12 Stunden, insbesondere wenigstens 16 Stunden bevorzugt. Im Temperaturbereich zwischen 20 °C und 100 °C hingegen werden Inkubationszeiten zwischen 8 und 16 Stunden bevorzugt.

In der der vorliegenden Erfindung zugrundeliegenden Studie wurde gezeigt, dass die erfindungsgemäße Zusammensetzung ihre vorteilhaften Eigenschaften auch nach einer Lagerung von 4 Wochen nicht verliert. Somit umfasst die Erfindung besonders bevorzugt alle erfindungsgemäßen Zusammensetzungen aus Isocyanat A und saurem Phosphorsäureester B, die zwischen 8 Stunden und 12 Wochen, stärker bevorzugt zwischen 12 Stunden und 8 Wochen und am stärksten bevorzugt zwischen 24 Stunden und 4 Wochen bei Raumtemperatur inkubiert wurden.

### Verwendung der erfindungsgemäßen Zusammensetzung

Es wurde überraschend herausgefunden, dass der durch die Zugabe des sauren Phosphorsäureesters B zum Reaktionsgemisch aus Isocyanatkomponente und einer mit Isocyanat reaktiven Verbindung hervorgerufene Viskositätsanstieg nicht nur durch vorherige Inkubation der im Reaktionsgemisch verwendeten Gesamtmenge der Isocyanatkomponente verringert werden kann. Auch die Zugabe einer kleineren Menge der Isocyanatkomponente, die bereits für einen gewissen Zeitraum mit dem sauren Phosphorsäureester inkubiert wurde, hat einen vergleichbaren Effekt.

Deswegen betrifft eine weitere Ausführungsform der vorliegenden Erfindung die Verwendung der erfindungsgemäßen Zusammensetzung zur Verlängerung der Topfzeit einer Beschichtungszusammensetzung, welche wenigstens ein Isocyanat A1 und eine mit Isocyanat reaktive Verbindung C enthält

### Isocyanat A1

Alle Definitionen, die weiter oben für das Isocyanat A gegeben wurden, gelten auch für das Isocyanat A1. Insbesondere kann auch das Isocyanat A1 erfindungsgemäß ein Gemisch aus wenigstens zwei in dieser Anmeldung als erfindungsgemäß gekennzeichneten Isocyanaten enthalten. Als Isocyanat A1 sind die oben definierten isocyanatterminierten Präpolymere grundsätzlich ebenso gut geeignet wie alle anderen in dieser Anmeldung beschriebenen Isocyanate.

Besonders bevorzugt enthält das Isocyanat A1 wenigstens ein monomeres Isocyanat ausgewählt aus der Gruppe bestehend aus HDI, IPDI, H₁₂-MDI und XDI. Besagtes Isocyanat kann als Monomer oder als Oligomer vorliegen. Auch Gemische von Monomeren und Oligomeren desselben oder unterschiedlicher Isocyanate sind erfindungsgemäß. Besonders bevorzugt enthält das Isocyanat A1 keine anderen als die vorgenannten besonders bevorzugten Isocyanate.

### Isocyanat A und Isocyanat A1

Grundsätzlich muss das in der erfindungsgemäßen Zusammensetzung enthaltene Isocyanat A nicht identisch mit dem Isocyanat A1 sein. D.h. in einer Ausführungsform der vorliegenden Erfindung enthält das Isocyanat A wenigstens ein monomeres oder oligomeres Isocyanat, das nicht im Isocyanat A1 enthalten ist.

Hierbei ist es besonders bevorzugt, dass das Isocyanat A1 wenigstens ein Isocyanat ausgewählt aus der Gruppe bestehend aus HDI, IPDI, H₁₂-MDI und XDI enthält. Besagtes Isocyanat kann als Monomer oder als Oligomer vorliegen. Auch Gemische von Monomeren und Oligomeren desselben oder unterschiedlicher Isocyanate sind erfindungsgemäß. Besonders bevorzugt enthält das Isocyanat A1 keine anderen als die vorgenannten Isocyanate. Das Isocyanat A hingegen kann in dieser Ausführungsform jedes in dieser Anmeldung als erfindungsgemäß gekennzeichnete Isocyanat sein.

In einer ganz besonders bevorzugten Ausführungsform enthält das Isocyanat A nur solche monomeren oder oligomeren Isocyanate, die auch im Isocyanat A1 enthalten sind.

### Verbindung C

In dieser Anmeldung bezeichnet der Begriff "mit Isocyanat reaktive Verbindung C" jede in der Herstellung von Polyurethanen, Polyharnstoffen oder Thiourethanen verwendete Verbindung, deren funktionelle Gruppen mit der Isocyanatgruppe eine Additionsreaktion eingehen können.

Bevorzugt ist eine mit Isocyanat reaktive Verbindung C ausgewählt aus der Gruppe bestehend aus Alkoholen, Thiolen und Aminen. Da die Bildung eines Polymers voraussetzt, dass mehr als zwei Monomere miteinander reagieren, trägt die mit Isocyanat reaktive Verbindung C bevorzugt durchschnittlich mindestens zwei gleiche oder unterschiedliche funktionelle Gruppen, die mit Isocyanat reagieren können.

Die mit Isocyanat reaktive Verbindung C kann ein Monomer, ein Oligomer oder ein Polymer sein.

Als mit Isocyanat reaktive Verbindung C können die aus der Polyurethanchemie an sich bekannten Polyetherpolyole und/oder Polyesterpolyole verwendet werden.

Die als Komponente C verwendbaren Polyetherpolyole sind dem Fachmann aus der Polyurethanchemie bekannt. Diese werden typischerweise ausgehend von niedermolekularen mehrfachfunktionellen OH- oder NH-funktionellen Verbindungen als Starter durch Umsetzung mit cyclischen Ethern oder Mischungen verschiedener cyclischer Ether erhalten. Als Katalysatoren werden dabei Basen wie KOH oder Doppelmetallcyanid-basierende Systeme verwendet. Hierzu geeignete Herstellungsverfahren sind dem Fachmann an sich beispielsweise aus US-B 6 486 361 oder L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff. bekannt.

Geeignete Starter weisen bevorzugt 2 bis 8, besonders bevorzugt 2 bis 6 zur Polyaddition mit cyclischen Ethern befähigte Wasserstoffatome auf. Derartige Verbindungen sind beispielsweise Wasser, Ethylenglykol, 1,2- oder 1,3-Propylenglykol, 1,3-Butandiol, 1,4-Butandiol, 1,6-Hexandiol, Bisphenol-A, Neopentylglykol, Glycerin, Trimethylolpropan, Pentaerythrit, Sorbit.

Als cyclische Ether kommen Alkylenoxide wie Ethylenoxid, Propylenoxid, Butylenoxid, Epichlorhydrin oder Styroloxid oder Tetrahydrofuran in Betracht.

Bevorzugte in C eingesetzte Polyetherpolyole sind auf den vorstehend genannten Startern basierende Polyether mit Propylenoxid-, Ethylenoxid- und/oder Tetrahydrofuran-Einheiten, besonders bevorzugt mit Propylenoxid- und/oder Ethylenoxid-Einheiten.

Unter den als Komponente C verwendbaren Polyesterpolyolen werden im Rahmen der vorliegenden Erfindung Polyester mit mehr als einer OH-Gruppe, bevorzugt zwei endständigen OH-Gruppen verstanden. Solche Polyester sind dem Fachmann bekannt.

So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höheren Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3-Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische.

Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von e-Caprolacton, auch "Polycaprolactone" genannt, oder Hydroxycarbonsäuren, beispielsweise Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Als mit Isocyanat reaktive Verbindung C können auch Polythiole verwendet werden. Als Polythiole eignen sich beispielsweise Methandithiol, 1,2-Ethandithiol, 1,1- Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1- Cyclohexandithiol, 1,2-Cyclohexandithiol, 2,2-Dimethylpropan-1,3-dithiol, 3,4- Dimethoxybutan-1,2-dithiol und 2-Methylcyclohexan-2,3-dithiol, Thioethergruppen enthaltende Polythiole, wie z. B. 2,4-Dimercaptomethyl-1,5-dimercapto-3-thiapentan, 4- Mercaptomethyl-1,8-dimercapto-3,6-dithiaoctan" 4,8-Dimercaptomethyl-l,l 1-dimercapto-3,6,9-trithiaundecan, 4,7-Dimercaptomethyl- 1,11 -dimercapto-3,6,9- trithiaundecan, 5, 7-Dimercaptomethyl- 1, 11 -dimercapto-3, 6,9-trithiaundecan, 4,5- Bis(mercaptoethylthio)- 1, 10-dimercapto-3,8-dithiadecan, Tetra- kis(mercaptomethyl)methan, 1, 1,3,3-Tetrakis(mercaptomethylthio)propan, 1, 1,5,5- Tetrakis(mercaptomethylthio)-3-thiapentan, 1, 1,6,6-Tetrakis(mercaptomethylthio)-3,4- dithiahexan, 2-Mercaptoethylthio- 1,3-dimercaptopropan, 2,3-Bis(mercaptoethylthio)- 1 - mercaptopropan, 2,2-Bis(mercaptomethyl)- 1,3-dimercaptopropan,Bis(mercaptomethyl)sulfid, Bis(mercaptomethyl)disulfid, Bis(mercaptoethyl)sulfid, Bis(mercaptoethyl)disulfid, Bis(mercaptopropyl)sulfid, Bis(mercaptopropyl)disulfid, Bis(mercaptomethylthio)methan, Tris(mercaptomethylthio)methan, Bis(mercaptoethylthio)methan, Tris(mercaptoethylthio)methan, Bis(mercaptopropylthio)methan, 1,2-Bis(mercaptomethylthio)ethan, 1,2-Bis(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercaptoethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5- Dimercapto-1,4-dithian, 2,5-Bis(mercaptomethyl)-l,4-dithian und dessen gemaess JP-A 07118263 erhaeltliche Oligomere, 1,5-Bis(mercaptopropyl)-l,4-dithian, 1,5-Bis(2- mercaptoethylthiomethyl)- 1,4-dithian, 2-Mercaptomethyl-6-mercapto- 1,4- dithiacycloheptan, 2,4,6-Trimercapto- 1,3,5-trithian, 2,4,6-Trimercaptomethyl- 1,3,5- trithian und 2-(3-Bis(mercaptomethyl)-2-thiapropyl)-l,3-dithiolan, Polyesterthiole, wie z. B. Ethylenglycol-bis(2-mercaptoacetat), Ethylenglycol-bis(3-mercaptopropionat), Diethylenglycol(2-mercaptoacetat), Diethylenglycol(3 -mercaptopropionat), 2,3 - Dimercapto- 1 -propanol(3 -mercaptopropionat), 3 -Mercapto- 1,2-propandiol-bis(2-mercaptoacetat), 3-Mercapto-1,2-propandiol-bis(3-mercaptopropionat), Trimethylolpropan-tris(2-mercaptoacetat), Trimethylolpropan-tris(3 -mercaptopropionat), Trimethylolethan-tris(2-mercaptoacetat), Trimethylolethan-tris(3 -mercaptopropionat), Pentaerythrit- tetrakis(2-mercaptoacetat), Pentaerythrit-tetrakis(3-mercaptopropionat), Glycerin-tris(2- mercaptoacetat), Glycerin-tris(3-mercaptopropionat), 1,4-Cyclohexandiol-bis(2- mercaptoacetat), 1,4-Cyclohexandiolbis(3-mercaptopropionat), Hydroxymethylsulfid- bis(2-mercaptoacetat), Hydroxymethylsulfid-bis(3-mercaptopropionat), Hydroxyethyl- sulfid(2-mercaptoacetat), Hydroxyethylsulfid(3-mercaptopropionat), Hydroxymethyl- disulfid(2-mercaptoacetat), Hydroxymethyldisulfid(3-mercaptopropionat), (2- Mercaptoethylester)thioglycolat und Bis(2-mercaptoethylester)thiodipropionat sowie aromatische Thio Verbindungen, wie z. B. 1,2-Dimercaptobenzol, 1,3-Dimercaptobenzol, 1.4- Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris(mercaptomethyl)benzol, 1,2,4-Tris(mercaptomethyl)benzol, 1,3,5-Tris(mercaptomethyl)benzol, 1,2,3- Tris(mercaptoethyl)benzol, l,3,5-Tris(mercaptoethyl)benzol, 1,2,4- Tris(mercaptoethyl)benzol, 2,5-Toluoldithiol, 3,4-Toluoldithiol, 1,4-Naphthalindithiol, 1.5- Naphthalindithiol, 2,6-Naphthalindithiol, 2,7-Naphthalindithiol, 1,2,3,4- Tetramercaptobenzol, 1,2,3,5-Tetramercaptobenzol, 1,2,4,5-Tetramercaptobenzol, 1.2.3.4- Tetrakis(mercaptomethyl)benzol, 1,2,3,5-Tetrakis(mercaptomethyl)benzol, 1.2.4.5- Tetrakis(mercaptomethyl)benzol, 1,2,3,4-Tetrakis(mercaptoethyl)benzol, 1,2,3,5- Tetrakis(mercaptoethyl)benzol, 1,2,4,5-Tetrakis(mercaptoethyl)benzol, 2,2'-Dimercaptobiphenyl und 4,4'-Dimercaptobiphenyl.

Vorzugsweise ist das Polythiol ausgewählt aus 4-Mercaptomethyl-1,8-dimercapto-3,6- dithiaoctan,, 2,5-Bismercaptomethyl-1,4-dithian, 1,1,3,3-Tetrakis(mercaptomethylthio)propan, 5,7-Dimercaptomethyl- 1,11 -dimercapto-3,6,9- trithiaundecan, 4, 7-Dimercaptomethyl- 1, 11 - dimercapto-3, 6,9-trithiaundecan, 4,8- Dimercaptomethyl-1,11 -dimercapto-3, 6,9-trithiaundecan, Trimethylolpropan-tris(3- mercaptopropionat), Trimethylolethan-tris(2-mercaptoacetat), Pentaerythrit-tetrakis(2- mercaptoacetat) und/ oder Pentaerythrit-tetrakis(3-mercaptopropionat).

Als mit Isocyanat reaktive Verbindung C können ebenfalls die aus der Literatur bekannten Polyamine verwendet werden. Geeignete Polyamine sind alle aromatischen, aliphatischen, cycloaliphatischen oder heterocyclischen Verbindungen mit mindestens 2 primären oder sekundären Aminogruppen pro Molekül.

Besonders bevorzugt ist die mit Isocyanat reaktive Verbindung C ausgewählt aus der Gruppe bestehend aus Polypropylenoxiden, Polythioethern und Polyester Polyolen.

### Additive

Weiterhin kann die Mischung von A und B mit A1 und C zusätzliche Additive enthalten. Das können die für die Urethanbildung typischen Katalysatoren sein. Beispiele für geeignete Katalysatoren werden beispielweise in Becker / Braun, Kunststoffhandbuch Band 7, Polyurethane, Kapitel 3.4 angegeben. Als Katalysator kann insbesondere eine Verbindung ausgewählt aus der Gruppe der Amine und Metallorganyle, bevorzugt aus der Gruppe der Zinnorganyle und der Bismuthorganyle und besonders bevorzugt Dibutylzinndilaurat verwendet werden.

Der Katalysator kann sowohl mit geeigneten Lösemitteln verdünnt als auch unverdünnt einer der beiden Komponenten zugegeben werden. Bevorzugt wird der Katalysator ohne Zusatz von Lösemittel mit einer Komponente vorgemischt, bevor diese mit der anderen Komponente vermischt wird.

Als weitere Komponenten können verschiedene Additive wie zum Beispiel Flammschutzmittel, Farbstoffe, Fluoreszenzstoffe, transparente Füllstoffe, Lichtschutzmittel, Antioxidantien, Thixotropiermittel, Entformungsmittel, Haftvermittler, licht-streuende Mittel und gegebenenfalls weitere Hilfs- und Zusatzstoffe zugegeben werden.

Optional werden die Einsatzstoffe vor Vermischung durch geeignete Verfahren getrocknet und entgast, um unerwünschte Nebenreaktionen und Blasenbildung zu verhindern.

Die erfindungsgemäßen Zubereitungen sind nach Möglichkeit wasserfrei zu formulieren, da geringe Mengen an Feuchtigkeit zur Blasenbildung führen können. Der Restwassergehalt von Polyolen, gegebenenfalls verwendeten Lösemitteln und Zuschlagstoffen ist daher so gering zu halten, dass keine Störungen auftreten. Üblicherweise liegen solche Wassergehalte in der Größenordnung von < 0,5 Gew.-%.

Die erfindungsgemäßen Zubereitungen können auch unter Verwendung von bis zu 40 Gew.-% an organischen Lösemitteln aufgebaut werden, bevorzugt sind jedoch keine oder nur geringe Mengen an Lösemitteln.

### Mengenverhältnis der Komponenten A und A1

Das Mengenverhältnis der Komponente A zur Komponente A1 ist so berechnet, dass im Reaktionsgemisch die benötigte Menge an saurem Phosphorsäureester B vorliegt. Diese hängt u. A. von der Zusammensetzung des herzustellenden Polyurethans, den verwendeten Gießformen und dem Temperaturprogramm während der Härtung des Reaktionsgemisches ab. Der Fachmann weiß, wie die benötigte Menge an saurem Phosphorsäureester zu bestimmen ist. Dieses kann, wenn nötig, durch eine einfache Versuchsreihe geschehen.

### Topfzeit

Unter "Topfzeit" wird in dieser Anmeldung der Zeitraum nach dem Vermischen der erfindungsgemäßen Zusammensetzung mit dem Isocyanat A1 und der mit Isocyanat reaktiven Verbindung C sowie einem geeigneten Katalysator - wie im Abschnitt "Additive" beschriebenverstanden, in dem die Viskosität des Reaktionsgemisches noch nicht so stark angestiegen ist, dass eine Verarbeitung des Gemisches unmöglich ist. Diese Verarbeitung besteht insbesondere in dem Einfüllen des Reaktionsgemisches in eine Gießform.

Bevorzugt wird der Viskositätsanstieg über ein Zeitraum von 60 Minuten bestimmt. Besonders bevorzugt wird der Viskositätsanstieg einer Mischung der erfindungsgemäßen Zusammensetzung mit den Komponenten A1 und C im Vergleich zu einem Gemisch ("Vergleichszusammensetzung") der Komponenten A, A1, B und C bestimmt, bei dem der saure Phosphorsäureester B vorher nicht mit einem Isocyanat A und/oder A1 inkubiert wurde.

Bei Verwendung der erfindungsgemäßen Zusammensetzung an Stelle der Vergleichszusammensetzung beträgt der Viskositätsanstieg im Zeitraum von 60 Minuten bevorzugt höchstens 80 % des Wertes, der bei der Vergleichszusammensetzung erreicht wird.

### Verfahren zur Herstellung der erfindungsgemäßen Zusammensetzung

In einer weiteren Ausführungsform betrifft die vorliegende Erfindung ein Verfahren zur Herstellung einer Zusammensetzung enthaltend einen sauren Phosphorsäureester B als Entformungsmittel, enthaltend die Schritte
i) Vermischen eines Isocyanats A und eines sauren Phosphorsäureesters B; und
ii) Inkubation des entstandenen Gemisches.

Alle weiter oben gegebenen Definitionen gelten auch für diese Ausführungsform der Erfindung. Dies gilt insbesondere für das Mengenverhältnis und chemische Struktur der Komponenten A und B sowie für die Dauer und Temperatur der Inkubation in Verfahrensschritt ii).

### Herstellung einer Polyurethanzusammensetzung

In noch einer weiteren Ausführungsform betrifft die vorliegende Erfindung Verfahren zur Herstellung Polyurethanzusammensetzung mit verlängerter Topfzeit, welche wenigstens ein Isocyanat A1 und eine mit Isocyanat reaktive Verbindung C enthält, enthaltend die Schritte
a) Bereitstellen einer Zusammensetzung enthaltend ein Isocyanat A und einen sauren Phosphorsäureester B;
b) Abmischen der Zusammensetzung aus Verfahrensschritt a) mit einem Isocyanat A1;
   und
c) Abmischen des Produkts aus Verfahrensschritt b) mit wenigstens einer mit Isocyanat reaktiven Verbindung C.

Soweit nicht anders angegeben, gelten alle weiter oben in dieser Anmeldung gegebenen Definitionen auch für diese Ausführungsform.

Die in Verfahrensschritt a) bereitgestellte Zusammensetzung enthaltend ein Isocyanat A und einen sauren Phosphorsäureester B ist die oben beschriebene erfindungsgemäße Zusammensetzung, die auch wie weiter oben in dieser Anmeldung beschrieben inkubiert wurde.

Die Verfahrensschritte b) und c) können in beliebiger Reihenfolge oder auch gleichzeitig durchgeführt werden. Sie werden aber immer erst nach dem Verfahrensschritt a) durchgeführt.

Die folgenden Ausführungsbeispiele dienen dazu, die Erfindung zu illustrieren. Sie sollen den Schutzumfang der Patentansprüche in keiner Weise beschränken.

### Beispiele

Alle Prozentangaben beziehen sich, soweit nichts Anderslautendes vermerkt, auf das Gewicht. Sofern nichts Anderslautendes vermerkt, beziehen sich alle Werte auf eine Temperatur von 23°C.

Die verschiedenen Polyisocyanate und die Polyole wurden bei der Covestro AG (DE) bezogen; Zelec UN von der Firma Stepan (www.stepan.com); der Katalysator TIB-Kat VP 13-262 F von der Firma TIB Chemicals (DE); die Polythiole von der Fa. Bruno Bock (DE). Zelec UN wurde eingesetzt wie gekauft.

Polyol W ist ein Polypropylenoxid Polyether basierend auf Trimethylolpropan als Startermolekül mit einer OH-Zahl von 550 mg/g und einer Viskosität von ca. 1800 mPas. Polyol X ist ein Polypropylenoxid Polyether basierend auf Glycerin als Startermolekül mit einer OH-Zahl von 570 mg/g und einer Viskosität von ca. 660mPas. Polyol Y ist ein Polythioether mit einem SH-Gehalt von ca. 36% und einer Viskosität von <10 mPas. Polyol Z ist ein Polyester aus Pentaerythrit und Mercaptopropionsäure mit einem SH-Gehalt von ca. 26% und einer Viskosität von ca. 400mPas.

Der Masterbatch wurde durch Mischen des jeweiligen Diisocyanats mit Zelec UN hergestellt. Als Mischaggregat wurde ein Speed-Mixer (Typ DAC 150 FVZ) der Firma Hauschild (DE) verwendet (1 min bei 3000 U/min). Anschließend wurde der Masterbatch für 24 Stunden bei Raumtemperatur stehen gelassen.

Zur Bestimmung der Topfzeit wurde die Viskosität der jeweiligen Mischung mit einem Physica MCR 51 Rheometer der Fa. Anton Paar Germany GmbH (DE) nach DIN EN ISO 3219 bestimmt.

Die Reaktionsmischungen aus Polyisocyanat, Polyol, Katalysator und Masterbatch oder Zelec UN wurden ebenfalls in einem Speed-Mixer (Typ DAC 150 FVZ) der Firma Hauschild (DE) hergestellt (1 min bei 3000 U/min).

Die Proben zur Bestimmung des Viskositätsanstieges wurden nach folgender Formulierung hergestellt:
a) Vergleichsbeispiele: die Isocyanatkomponente wird mit 3,74 Gew.% (bezogen auf die Isocyanatkomponente) Zelec UN versetzt. Anschließend werden die Polyolkomponente, im Verhältnis NCO:OH = 1,12, sowie 0,0196 Gew.% (bezogen auf val NCO-Gruppen) Katalysator zugegeben. Die Zusammensetzung wird für 1 Minute bei 3000 U/min im Speed-Mixer gemischt und sofort in das Rheometer überführt und die Viskosität bestimmt. Die Spalte "Variante" in Tabelle 1 gibt die Zeitdauer an, die vom Zeitpunkt der Vermischung von Isocyanatkomponente und Zelec UN bis zur Zugabe von Polyol und Katalysator gewartet wurde.
b) Erfindungsgemäße Beispiele: die Isocyanatkomponente wird mit 7,48 Gew.% (bezogen auf die Isocyanatkomponente) Masterbatch vermischt, anschließend mit der Polyolkomponente im Verhältnis NCO:OH = 1,12 vermischt. Danach werden 0,0196 Gew.% (bezogen auf val NCO-Gruppen) Katalysator zugegeben. Die Zusammensetzung wird für 1 Minute bei 3000 U/min im Speed-Mixer gemischt und sofort in das Rheometer überführt und die Viskosität bestimmt. Die Spalte "Variante" in den Tabellen 1 und 2 gibt die Zeitdauer an, die vom Zeitpunkt der Vermischung von Isocyanatkomponente und Masterbatch bis zur Zugabe von Polyol und Katalysator gewartet wurde.

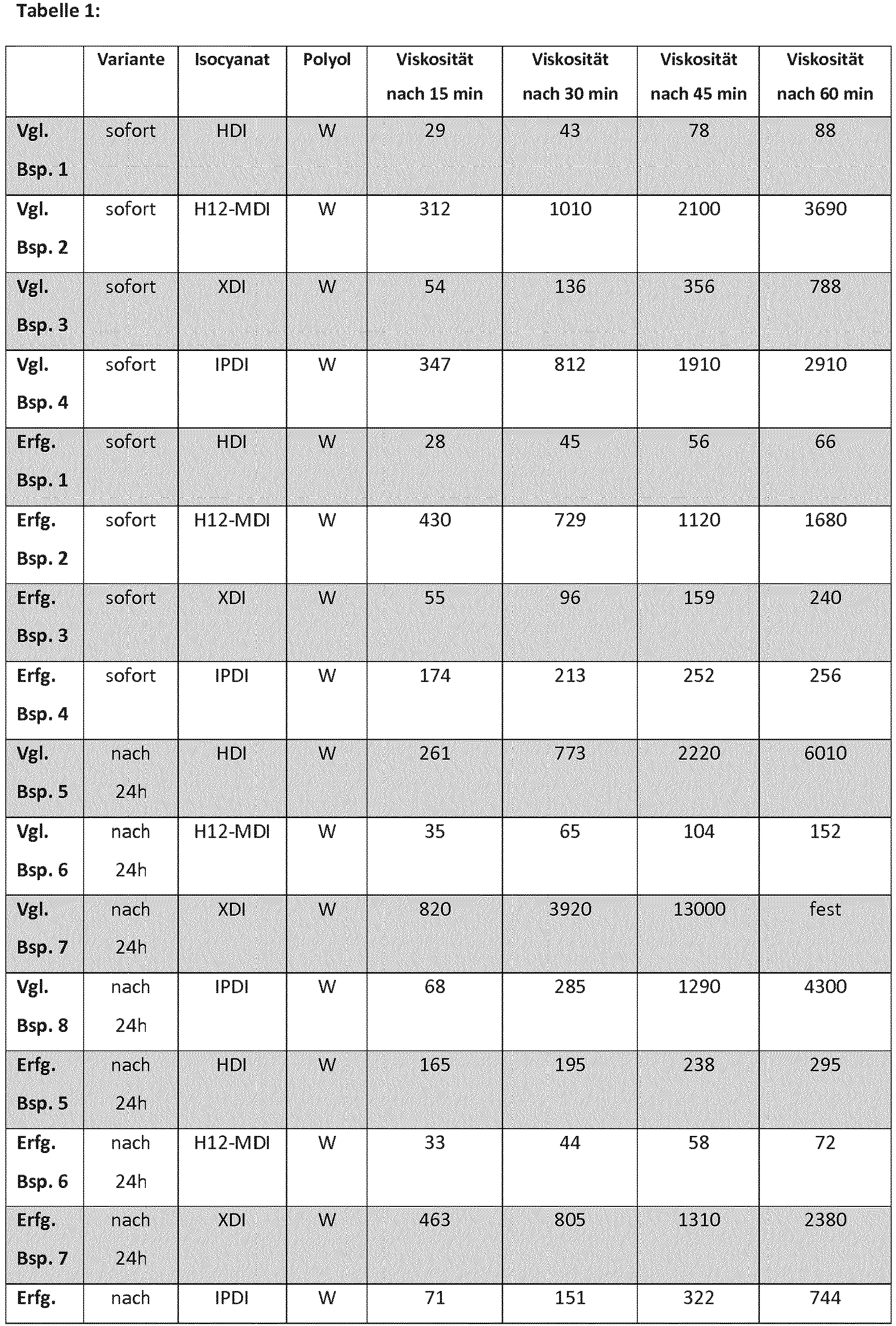

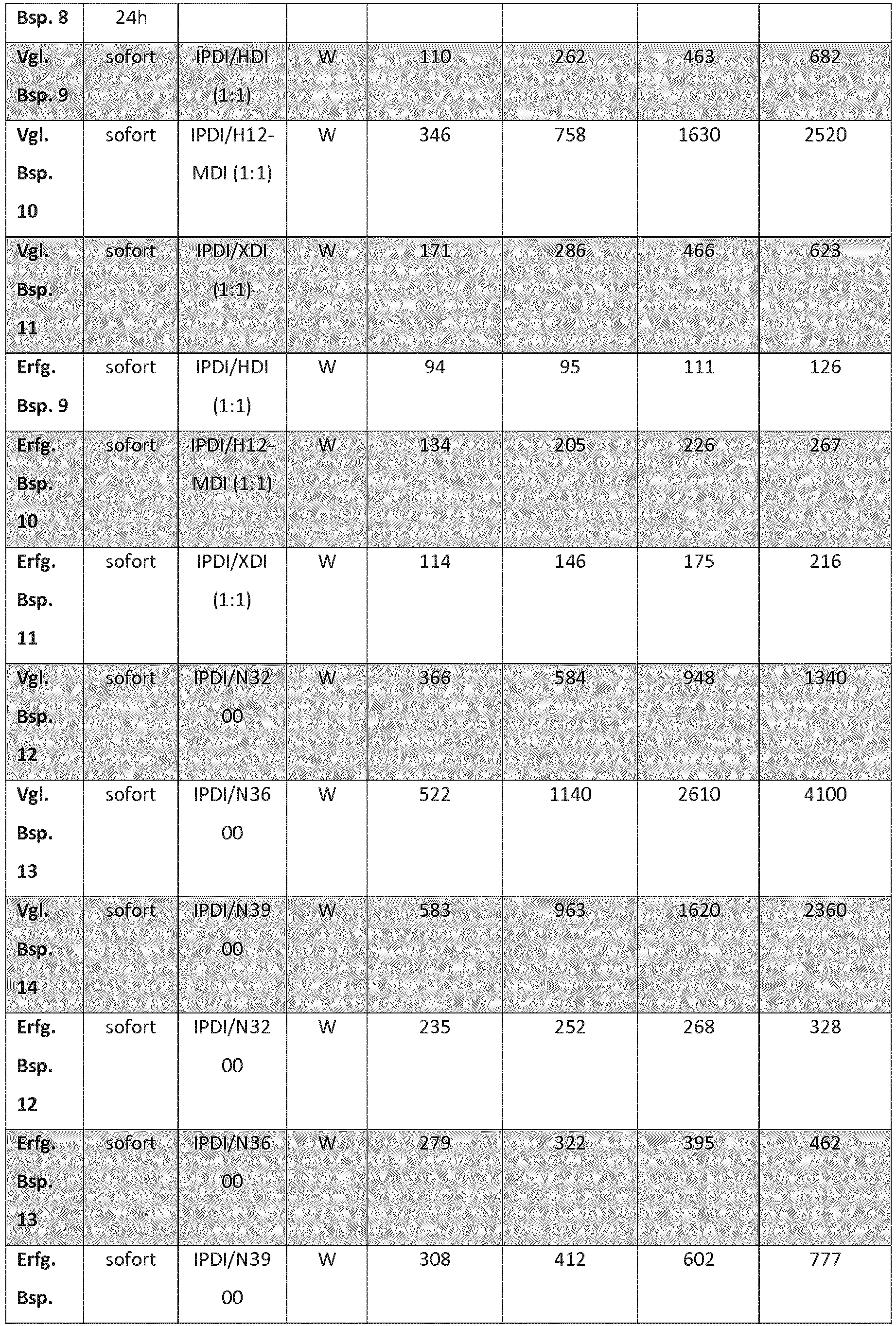

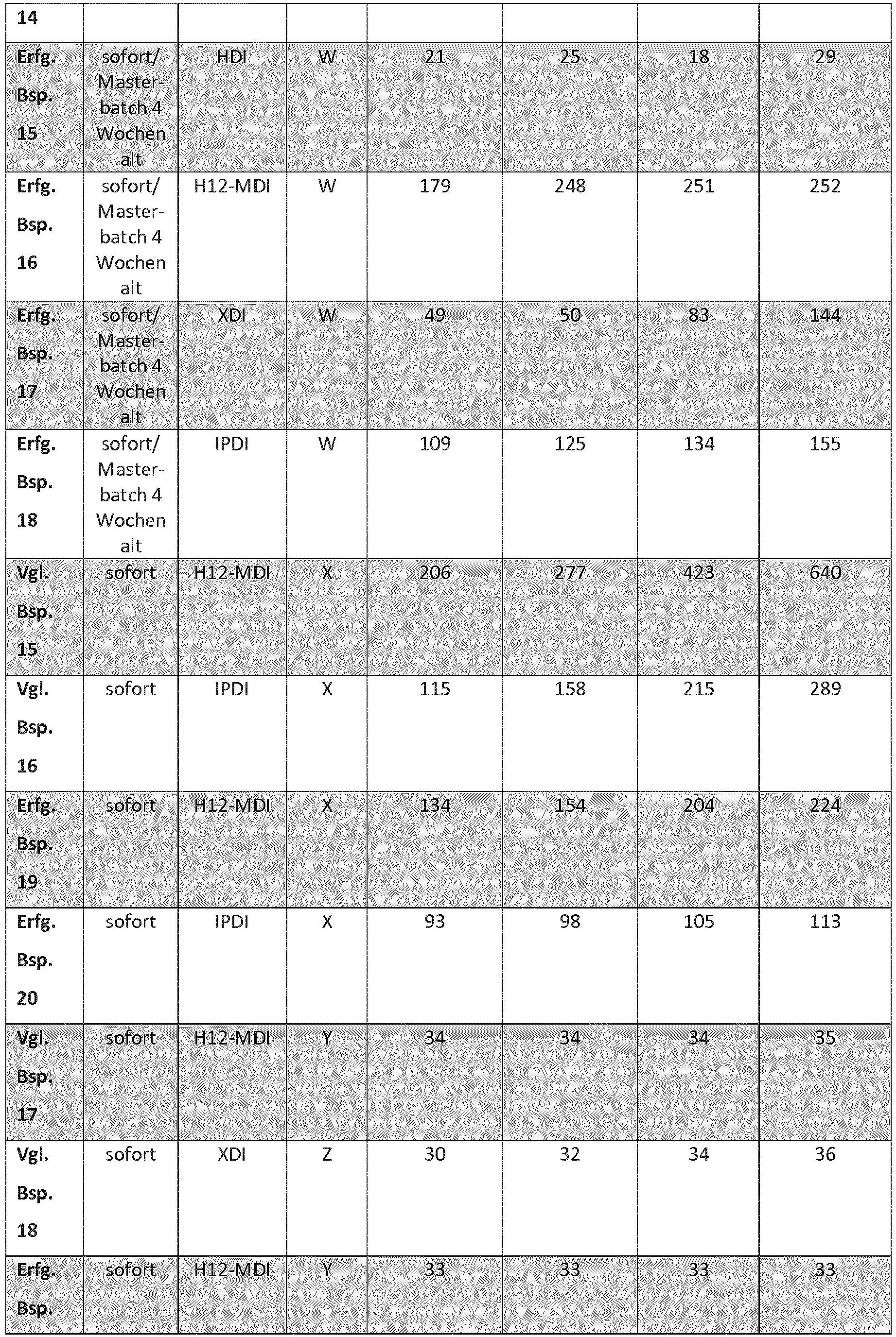

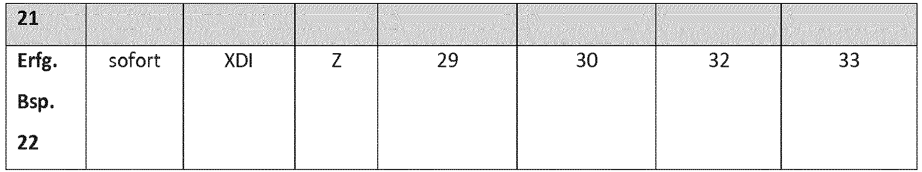

Tabelle 1 zeigt sehr deutlich den Effekt eines Masterbatches. Die Viskosität der 2-komponentigen Mischung steigt im Verlauf der Messungen (jeweils über 1 Stunde) sehr viel geringer an, als bei direkter Zugabe des sauren Phosphorsäureesters zur Isocyanatkomponente. Dieser Effekt tritt sowohl bei monomeren Diisocyanaten (Beispiele 1-4), Mischungen verschiedener monomerer Diisocyanate (Beispiele 9-11), als auch bei Mischungen monomerer Diisocyanate mit verschiedenen Isocyanat-Derivaten auf (Beispiele 12-14). Dabei ist es unerheblich, ob man den Masterbach zur Isocyanatkomponente gibt und sofort die 2-komponentige Mischung herstellt und deren Viskositätsverlauf betrachtet (Beispiele 1-4 und 9-14) oder ob man nach Zugabe des Masterbatches zur Isocyanatkomponente diese eine Zeit lang (in den Beispielen 24h lang) reifen lässt und erst im Anschluss daran die 2-komponentige Mischung herstellt und deren Viskositätsverlauf betrachtet (Beispiele 5-8).

Der Effekt des Masterbatches ist dabei nicht auf ein bestimmtes Polyol begrenzt, sondern zeigt sich auch bei niedrig viskosen Polyolen (Beispiele 19-20) und auch bei Polythiolen (Beispiele 21-22), auch wenn hier die Senkung der Viskosität aufgrund der niedrigen Viskosität der Polyole/Polythiole schwächer ausfällt.

Beispiele 15-18 zeigen schließlich, dass der Effekt eines Masterbatches nicht vom seinem Alter abhängig ist. Hier wurde ein 4 Wochen alter Masterbatch zur Herstellung der Formulierung verwendet und ergab vergleichbare oder sogar niedrigere Viskositätswerte als ein frisch hergestellter Masterbatch (s. erfindungsgemäße Beispiele 1-4).

Somit ermöglicht die Verwendung eines Masterbatches eine sehr viel wirtschaftlichere Herstellung von niedrigviskosen 2-komponentigen Polyurethanmassen , da dadurch eine sofortige Verwendung der 2-komponentige Mischung möglich ist und keine Inkubationszeit eingehalten werden muss. Außerdem kann ein Masterbatch über mehrere Wochen eingesetzt werden, so dass eine zeitliche Entkopplung der Herstellung des Masterbatches und seiner Verwendung möglich ist.

Der Masterbatch aus saurem Phosphorsäureester und Isocyanat kann dabei in einem weiten Bereich eingestellt werden. Tabelle 2 zeigt die sofort nach Herstellung erhaltenen Viskositäten verschiedener Masterbatch-Mischungen aus H12-MDI und Zelec mit Polyol X. **Tabelle 2:**

| | **Verhältnis H12-MDI:Zelec** | **Viskosität nach 15 min** | **Viskosität nach 30 min** | **Viskosität nach 45 min** | **Viskosität nach 60 min** |
|---|---|---|---|---|---|
| **Erfg. Bsp. 23** | 4:1 | 213 | 288 | n.b. | n.b. |
| **Erfg. Bsp.24** | 2:1 | 157 | 217 | 262 | 337 |
| **Erfg. Bsp.25** | 1:2 | 124 | 144 | 158 | 174 |
| **Erfg. Bsp.26** | 1:4 | 150 | 183 | 236 | 290 |

| | | | | | |
|---|---|---|---|---|---|
| n.b.: nicht bestimmt | | | | | |

Hier zeigt sich, dass Beispiel 23 mit der geringsten Menge Zelec auf einem ähnlichen Viskositätsniveau liegt wie die Variante ohne Masterbatch (s. Vergleichsbeispiel 15). Dagegen zeigt sich ab einem Verhältnis Isocyanat zu saurem Phosphorsäureester von 2:1 bis hin zu stark erhöhten Konzentrationen an saurem Phosphorsäureester eine deutliche Erniedrigung der Viskosität der 2-komponentigen Mischung.

## Patentansprüche

1. Eine Zusammensetzung enthaltend ein Isocyanat A und einen sauren Phosphorsäureester B, wobei das Massenverhältnis von A zu B höchstens 3,5 :1,0 beträgt.

2. Die Zusammensetzung nach Anspruch 1, wobei das Isocyanat A ein aliphatisches, cycloaliphatisches, araliphatisches oder aromatisches Isocyanat oder eine Mischung davon ist.

3. Verwendung der Zusammensetzung nach Anspruch 1 oder 2 zur Verlängerung der Topfzeit einer Polyurethanzusammensetzung, welche wenigstens ein Isocyanat A1 und wenigstens eine mit Isocyanat reaktive Verbindung C enthält.

4. Verwendung nach Anspruch 3, wobei die mit Isocyanat reaktive Verbindung C ein Polyol, Polyamin oder ein Polythiol ist.

5. Verfahren zur Herstellung einer Zusammensetzung enthaltend einen sauren Phosphorsäureester B als Entformungsmittel, enthaltend die Schritte
i) Vermischen eines Isocyanats A und eines sauren Phosphorsäureesters B, wobei das Gewichtsverhältnis des Isocyanats A zu dem sauren Phosphorsäureester B zwischen 2,0 : 1,0 und 1,0 : 8,0 liegt; und
ii) Inkubation des entstandenen Gemisches.

6. Verfahren nach Anspruch 5, wobei die Inkubation in Verfahrensschritt für 8 bis 24 Stunden bei Temperaturen zwischen 10 °C und 40 °C erfolgt.

7. Verfahren zur Herstellung einer Beschichtungszusammensetzung mit verlängerter Topfzeit, welche wenigstens ein Isocyanat A1 und eine mit Isocyanat reaktive Verbindung C enthält, enthaltend die Schritte
a) Bereitstellen einer Zusammensetzung enthaltend ein Isocyanat A und einen sauren Phosphorsäureester B,, wobei das Gewichtsverhältnis von Isocyanat A zu saurem Phosphorsäureester B höchstens 2,0 : 1,0 beträgt;
b) Abmischen der Zusammensetzung aus Verfahrensschritt a) mit einem Isocyanat A1;
und
c) Abmischen des Produkts aus Verfahrensschritt b) mit wenigstens einer mit Isocyanat reaktiven Verbindung C.

8. Verfahren nach Anspruch 7, wobei das Isocyanat A ein aliphatisches, cycloaliphatisches, araliphatisches oder aromatisches Isocyanat oder eine Mischung davon ist.

9. Verfahren nach Anspruch 7 oder 8, wobei das Isocyanat A wenigstens ein monomeres oder oligomeres Isocyanat enthält, das nicht im Isocyanat A1 enthalten ist.

10. Verfahren nach Anspruch 7 oder 8, wobei das Isocyanat A nur solche Isocyanate enthält, die auch im Isocyanat A1 enthalten sind.

11. Verfahren nach einem der Ansprüche 7 bis 10, wobei die mit Isocyanat reaktive Verbindung C ein Polyol, ein Polyamin oder ein Polythiol ist.

12. Verfahren nach einem der Ansprüche 7 bis 11, wobei das Gewichtsverhältnis von Isocyanat A zu saurem Phosphorsäureester B zwischen 2,0 : 1,0 und 1,0 : 8,0 liegt.

## Claims

1. Composition containing an isocyanate A and an acidic phosphoric ester B, wherein the mass ratio of A to B is not more than 3.5 : 1.0.

2. Composition according to Claim 1, wherein the isocyanate A is an aliphatic, cycloaliphatic, araliphatic or aromatic isocyanate or a mixture thereof.

3. Use of the composition according to Claim 1 or 2 for extending the pot life of a polyurethane composition containing at least one isocyanate A1 and at least one isocyanate-reactive compound C.

4. Use according to Claim 3, wherein the isocyanate-reactive compound C is a polyol, polyamine or a polythiol.

5. Process for producing a composition containing an acidic phosphoric ester B as a demolding agent, containing the steps of
i) mixing an isocyanate A and an acidic phosphoric ester B, wherein the weight ratio of the isocyanate A to the acidic phosphoric ester B is between 2.0:1.0 and 1.0:8.0; and
ii) incubating the resulting mixture.

6. Process according to Claim 5, wherein the incubation in process step is carried out for 8 to 24 hours at temperatures between 10°C and 40°C.

7. Process for producing a coating composition having an extended pot life which contains at least one isocyanate A1 and an isocyanate-reactive compound C, containing the steps of
a) providing a composition containing an isocyanate A and an acidic phosphoric ester B, wherein the weight ratio of isocyanate A to acidic phosphoric ester B is not more than 2.0:1.0;
b) mixing the composition from process step a) with an isocyanate A1; and
c) mixing the product from process step b) with at least one isocyanate-reactive compound C.

8. Process according to Claim 7, wherein the isocyanate A is an aliphatic, cycloaliphatic, araliphatic or aromatic isocyanate or a mixture thereof.

9. Process according to Claim 7 or 8, wherein the isocyanate A contains at least one monomeric or oligomeric isocyanate not present in the isocyanate A1.

10. Process according to Claim 7 or 8, wherein the isocyanate A contains only isocyanates also present in isocyanate A1.

11. Process according to any of Claims 7 to 10, wherein the isocyanate-reactive compound C is a polyol, a polyamine or a polythiol.

12. Process according to any of Claims 7 to 11, wherein the weight ratio of isocyanate A to acidic phosphoric ester B is between 2.0:1.0 and 1.0:8.0.

## Revendications

1. Composition contenant un isocyanate A et un ester acide d'acide phosphorique B, le rapport en moles de A à B étant d'au plus 3,5:1,0.

2. Composition selon la revendication 1, dans laquelle l'isocyanate A est un isocyanate aliphatique, cycloaliphatique, araliphatique ou aromatique, ou un mélange de ceux-ci.

3. Utilisation de la composition selon la revendication 1 ou 2 pour prolonger la vie en pot d'une composition de polyuréthane, qui contient au moins un isocyanate A1 et au moins un composé C réactif vis-à-vis des isocyanates.

4. Utilisation selon la revendication 3, le composé C réactif vis-à-vis des isocyanates étant un polyol, une polyamine ou un polythiol.

5. Procédé de fabrication d'une composition contenant un ester acide d'acide phosphorique B comme agent de démoulage, contenant les étapes
i) mélange d'un isocyanate A et d'un ester acide d'acide phosphorique B, le rapport en poids de l'isocyanate A à l'ester acide d'acide phosphorique B étant compris entre 2,0:1,0 et 1,0:8,0; et
ii) incubation du mélange obtenu.

6. Procédé selon la revendication 5, dans lequel l'incubation, dans son étape, a lieu pendant 8 à 24 heures à des températures entre 10 °C et 40 °C.

7. Procédé de fabrication d'une composition de revêtement ayant une vie en pot prolongée, qui contient au moins un isocyanate A1 et un composé C réactif vis-à-vis des isocyanates, contenant les étapes
a) fourniture d'une composition contenant un isocyanate A et un ester acide d'acide phosphorique B, le rapport en poids de l'isocyanate A à l'ester acide d'acide phosphorique B étant d'au plus 2,0:1,0 ;
b) mélange de la composition de l'étape a) avec un isocyanate A1; et
c) mélange du produit de l'étape b) avec au moins un composé C réactif vis-à-vis des isocyanates.

8. Procédé selon la revendication 7, dans lequel l'isocyanate A est un isocyanate aliphatique, cycloaliphatique, araliphatique ou aromatique, ou un mélange de ceux-ci.

9. Procédé selon la revendication 7 ou 8, dans lequel l'isocyanate A contient au moins un isocyanate monomère ou oligomère qui n'est pas contenu dans l'isocyanate A1.

10. Procédé selon la revendication 7 ou 8, dans lequel l'isocyanate A ne contient que des isocyanates qui sont aussi contenus dans l'isocyanate A1.

11. Procédé selon l'une des revendications 7 à 10, dans lequel le composé C réactif vis-à-vis des isocyanates est un polyol, une polyamine ou un polythiol.

12. Procédé selon l'une des revendications 7 à 11, dans lequel le rapport en poids de l'isocyanate A à l'ester acide d'acide phosphorique B est compris entre 2,0:1,0 et 1,0:8,0.
